Europäisches Patentamt

European Patent Office

Office européen des brevets

(19)

(11) Veröffentlichungsnummer: **0 036 142
B1**

(12)

# EUROPÄISCHE PATENTSCHRIFT

(45) Veröffentlichungstag der Patentschrift:
04.09.85

(21) Anmeldenummer: 81101621.1

(22) Anmeldetag: 06.03.81

(51) Int. Cl.⁴: **G 21 C 3/32**

(54) **Brennelementbündel.**

(30) Priorität: 17.03.80 SE 8002080

(43) Veröffentlichungstag der Anmeldung:
23.09.81 Patentblatt 81/38

(45) Bekanntmachung des Hinweises auf die Patenterteilung:
04.09.85 Patentblatt 85/36

(84) Benannte Vertragsstaaten:
BE CH DE FR GB IT LI NL SE

(56) Entgegenhaltungen:
BE - A - 621 561
BE - A - 648 637
DE - A - 1 816 561
FR - A - 1 228 851
FR - A - 1 246 458
FR - A - 2 111 642
FR - A - 2 198 221
GB - A - 915 338
GB - A - 1 411 116
GB - A - 1 482 788
GB - A - 1 497 053
GB - A - 2 054 247
LU - A - 43 767
US - A - 3 164 530
US - A - 3 338 791

(73) Patentinhaber: AB ASEA-ATOM, S-721 83 Västeras (SE)

(72) Erfinder: Andersson, Ingemar, Ing., Barkarö Bygata 133,
S-725 90 Västeras (SE)
Erfinder: Borrman, Bo E., Ing., Rörverksgatan 16,
S-724 74 Västeras (SE)
Erfinder: Fredin, Bo, Dipl.-Ing., Ploggatan 13,
S-724 66 Västeras (SE)
Erfinder: Nylund, Olov, Dipl.-Ing., Ragnaröksgatan 17,
S-720 17 Västeras (SE)
Erfinder: Ode, Bengt, Ing., Löpargatan 80,
S-722 41 Västeras (SE)
Erfinder: van Santen, Art, Ing., Bernsborgsstigen 15,
S-722 18 Västeras (SE)
Erfinder: Hellman, Erik, Ing., Sveaborgsvägen 38,
S-723 55 Västeras (SE)

(74) Vertreter: Boecker, Joachim, Dr.-Ing.,
Rathenauplatz 2-8, D-6000 Frankfurt a.M. 1 (DE)

ACTORUM AG

## Beschreibung

Die Erfindung betrifft ein Brennelementbündel gemäss dem Oberbegriff des Anspruches 1*. Das untere Ende des Brennstoffkanals ist hydraulisch und mechanisch mit einem Übergangsstück verbunden, das mit einer Einlauföffnung für Wasser versehen ist. Die unteren Enden der Brennstäbe ruhen auf einer Gitteranordnung, die von dem Übergangsstück getragen wird.

Bei einem Brennelementbündel ohne Stützanordnung, wie es beispielsweise aus der DE-A-1 816 561 bekannt ist, besteht die Tendenz einer Kriechdehnung der Wände des Brennstoffkanals. Diese Erscheinung wird u.a. dadurch verursacht, dass der Brennstoffkanal schnellen Neutronen in Kombination mit einem inneren Überdruck ausgesetzt ist, wodurch die Wände nach aussen gepresst werden und diese nach aussen eine konvexe Form annehmen. Kriechdehnungen können somit an irgendeiner Stelle in den Spalten, in denen die Steuerstäbe gleiten, eine Verkleinerung der Spaltbreite bewirken, wodurch die Beweglichkeit der Steuerstäbe beeinträchtigt werden kann.

Aus der US-A-3 164 530 ist es bekannt, das Herauspressen der Brennstoffkanalwände dadurch zu verhindern, dass der Brennstoffkanal mit einer in der Mitte angebrachten Stützanordnung versehen wird, die im wesentlichen einen kreuzförmigen Querschnitt hat und sich längs eines überwiegenden Teils der vertikalen Länge der Brennstäbe erstreckt und die derart ausgebildet ist, dass der Brennstoffkanal in vier vertikale Teilkanäle aufgeteilt wird, wobei jeder Teilkanal ein Teilbündel umschliesst, das ¼ der Gesamtanzahl der Brennstäbe im Brennelementbündel enthält. Die Stützanordnung besteht in der genannten US-A-3 164 530 aus vier perforierten Teilungsplatten. Trotz dieser Perforierung lässt es sich nicht vermeiden, dass diese Teilungsplatten eine grössere Neutronenabsorption bewirken und somit die Brennstoffwirtschaftlichkeit vermindern.

Bei dem aus der LU-A-43 767 bekannten Brennelementbündel sind in die quadratische Aussenwand des Brennstoffkanals vier L-förmige Wandelemente derart eingesetzt, dass in dem Brennelementbündel ein zentrales, symmetrisch gelegener Wasserdurchströmungsweg gebildet wird und vier von diesen getrennte Teilkanäle, in denen die Brennstäbe angeordnet sind. Die vertikalen Enden der L-förmigen Wandelemente sind dabei an die äussere Wand des Brennstoffkanals angeschlossen. Der Zweck dieser Konstruktion besteht darin, einen Kanal für einen kreuzförmigen Steuerstab durch das Brennelementbündel zu schaffen. Die hierdurch gleichzeitig erzielte Versteifung des Brennstoffkanals ist nur gering, da die vier L-förmigen Wandelemente bzw. die von je zwei parallelen Schenkeln zweier Wandelemente gebildeten Flügel im zentralen Bereich des Brennstoffkanals keinerlei Verbindung miteinander haben. Eine Verformung der Wände des

* Ein solches Brennelementbündel ist bekannt aus der LU-A-43 767

Brennstoffkanals nach aussen wird durch diese Konstruktion nicht verhindert.

Aus der FR-A-2 198 221 ist es bekannt, bei einem Brennstoffelement an den Abstandshaltern für die Brennstäbe Umlenkbleche anzuordnen, durch welche dem nach oben strömenden Wasser eine horizontale Geschwindigkeitskomponente verliehen wird.

Der Erfindung liegt die Aufgabe zugrunde, ein Brennelementbündel der eingangs genannten Art zu entwickeln, welches in mechanischer Hinsicht die Vorteile der bekannten Stützanordnung nach der US-A-3 164 530 besitzt und gleichzeitig einen so günstigen Einfluss auf den Neutronenfluss hat, dass die Brennstoffwirtschaftlichkeit erheblich besser ist als bei einem entsprechenden Brennelementbündel ohne Stützanordnung.

Zur Lösung dieser Aufgabe wird ein Brennelementenbündel nach dem Oberbegriff des Anspruches 1 vorgeschlagen, das erfindungsgemäss die im kennzeichnenden Teil des Anspruches 1 genannten Merkmale hat.

Vorteilhafte Weiterbildungen der Erfindung sind in den abhängigen Ansprüchen genannt.

Gemäss der Erfindung wird die Stützanordnung dazu benutzt, im Reaktorkern eine relativ gleichmässig verteilte Moderatorwirkung in horizontaler Richtung und damit eine gleichmässigere Verteilung des Neutronenflusses zu bewirken, wodurch die Reaktivität des Brennelementbündels bei unveränderter Mittelanreicherung wesentlich erhöht wird und der Unterschied hinsichtlich der Leistungsbelastung und des Abbrandes zwischen den verschiedenen Brennstäben des Brennelementbündels erheblich kleiner wird.

Die Moderatorwirkung der Stützanordnung kommt dadurch zustande, dass sie mit mindestens einem durchgehenden, vertikalen Wasserkanal versehen ist, der sich längs eines überwiegenden Teils der Länge der Brennstäbe erstreckt und der an seinem unteren Ende eine Einlauföffnung für durchströmendes Wasser hat. Dadurch, dass das durch die vertikalen Kanäle der Stützanordnung hindurchströmende Wasser unterkühlt ist und nicht mit den Brennstäben in Berührung kommt, wird der Hohlraumanteil dieses Wassers Null oder ausserordentlich klein und seine Moderatorwirkung sehr hoch.

Anhand der in den Figuren gezeigten Ausführungsbeispiele soll die Erfindung näher erläutert werden. Es zeigen

Figur 1, 3, 4, 13, 14 und 16 Horizontalschnitte durch ein Brennelementbündel gemäss einer ersten, zweiten, dritten, vierten, fünften und sechsten Ausführungsform der Erfindung,

Figur 3a einen partiellen Vertikalschnitt durch die Mitte des in Figur 3 gezeigten Brennelementbündels und senkrecht zu zwei Brennstoffkanalseiten,

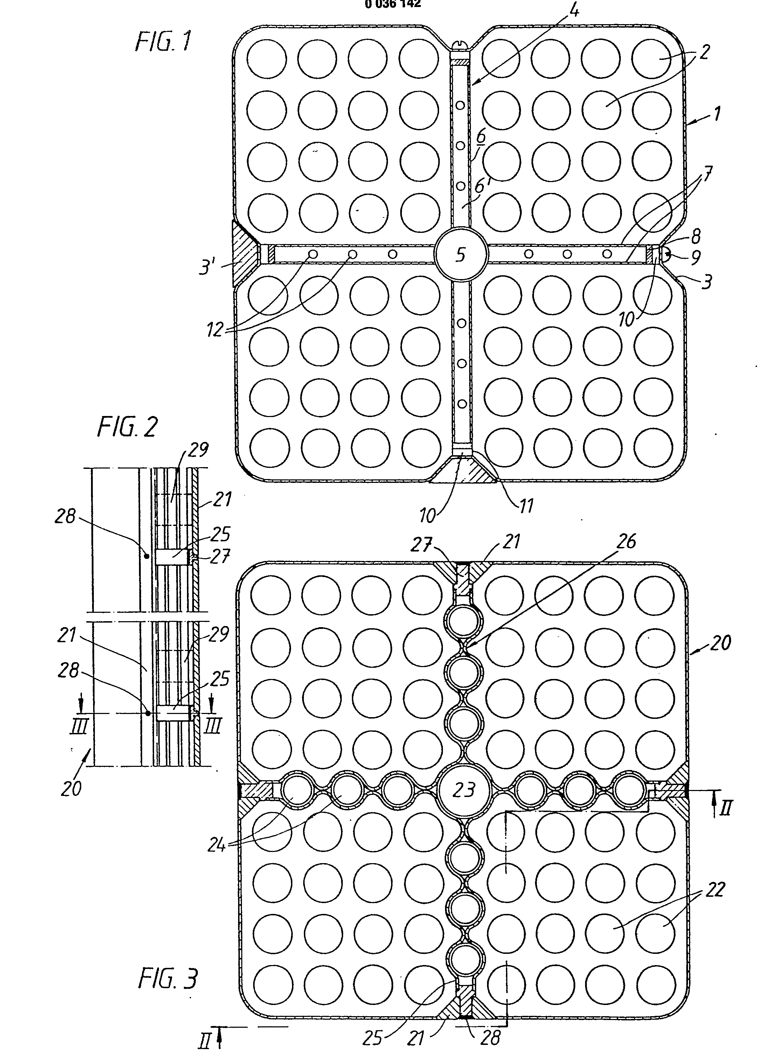

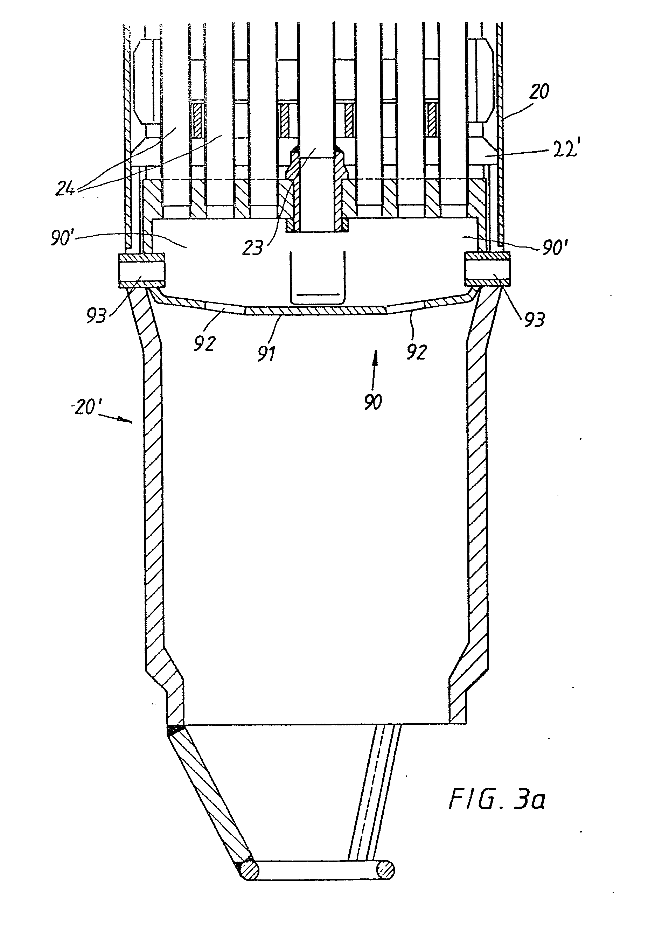

Figur 2 teils eine partielle Ansicht und teils einen partiellen Schnitt längs der Linie II–II in Figur 3,

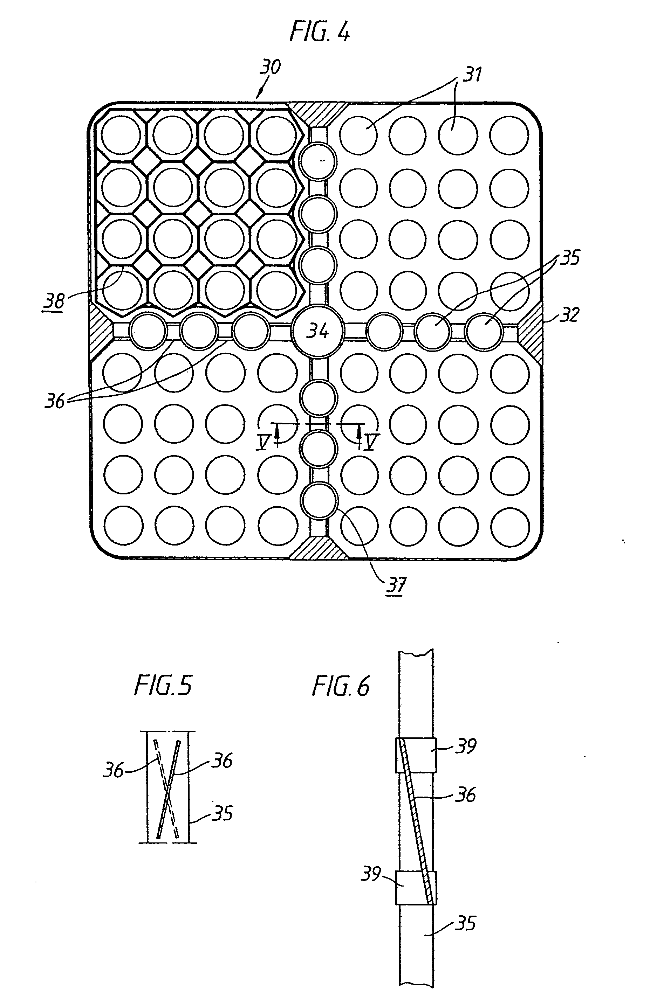

Figur 5 einen Schnitt längs der Linie V–V in Figur 4,

Figur 6 einen entsprechenden Schnitt bei einer alternativen, geringfügig abweichenden Ausführungsform,

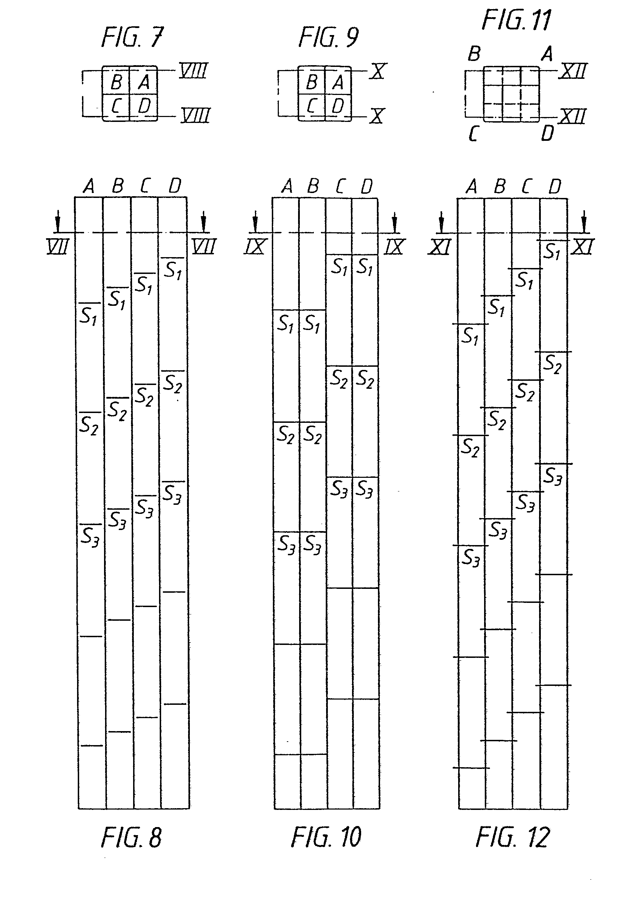

Figur 7 und 8 in schematischer Darstellung eine Möglichkeit der Plazierung der Abstandshalter bei den Brennelementbündeln gemäss der Erfindung, wobei Figur 7 ein horizontaler Schnitt längs der Linie VII–VII in Figur 8 ist und Figur 8 ein partieller Vertikalschnitt längs der Linie VIII–VIII in Figur 7 ist,

Figur 9 und 10 eine andere Ausführungsform der Plazierung der Abstandshalter in gleicher Darstellung wie die Figuren 7 und 8,

Figur 11 und 12 wieder eine andere Ausführungsform der Plazierung der Abstandshalter in entsprechender Darstellung wie in den Figuren 7 und 8,

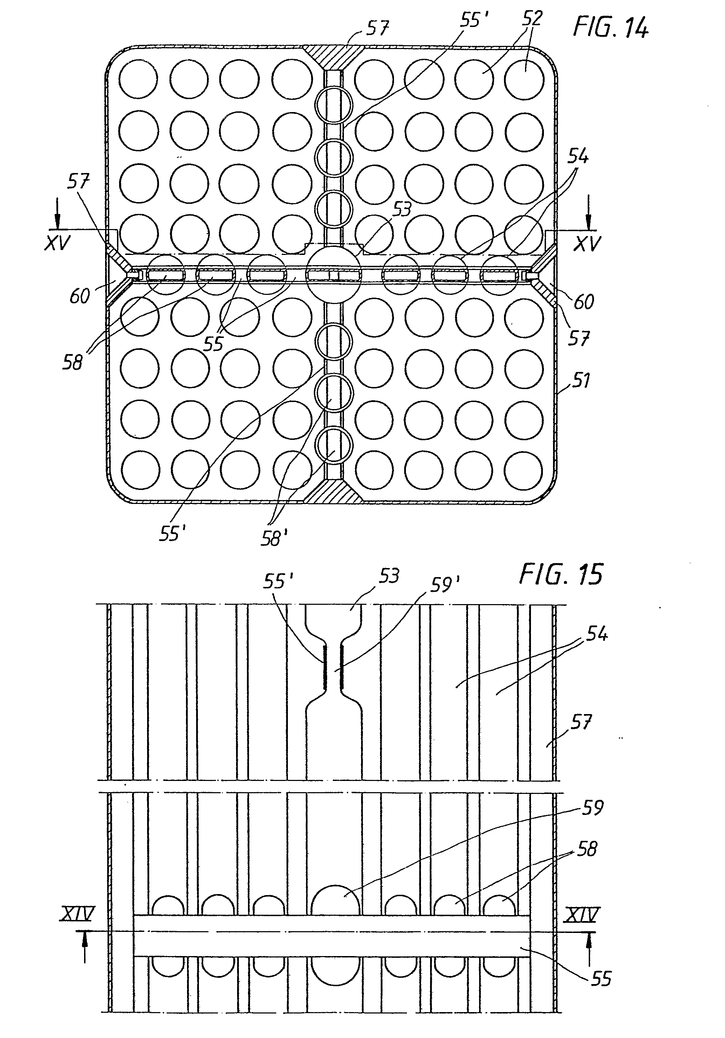

Figur 14 einen Schnitt längs der Linie XIV–XIV in Figur 15,

Figur 15 einen Schnitt längs der Linie XV–XV in Figur 14,

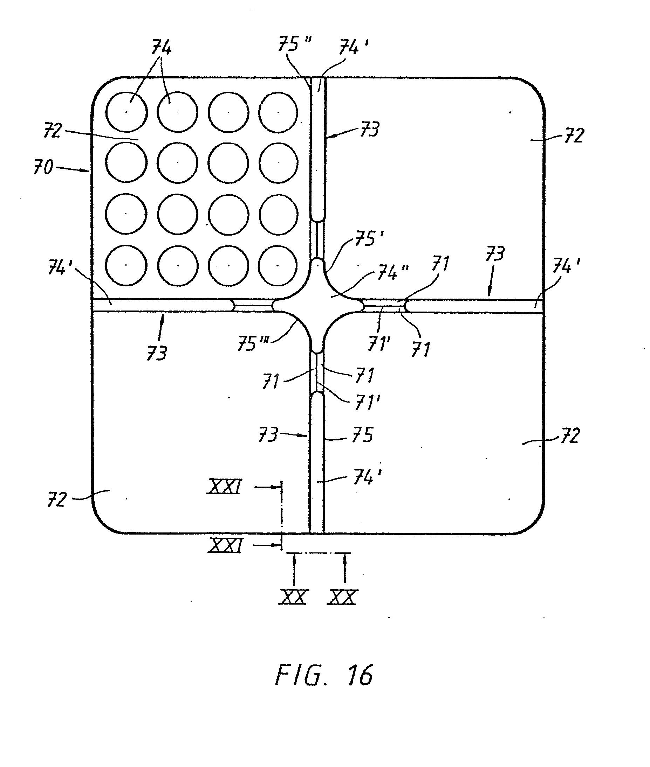

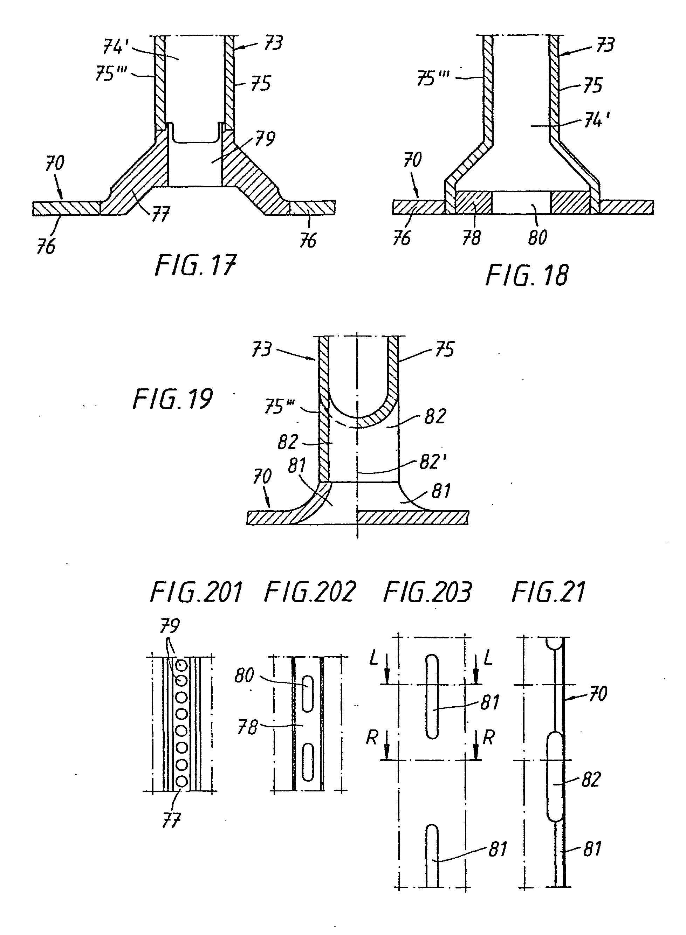

Figur 17, 18 und 19 in vergrösserter Darstellung und im Detail drei Ausführungsformen für die Verbindung der Flügel mit der Brennstoffkanalwand in Figur 16, wobei die linke Hälfte von Figur 19 ein Horizontalschnitt längs der Linie L–L in Figur 203 ist und die rechte Hälfte von Figur 19 ein Horizontalschnitt längs der Linie R–R in Figur 203 ist,

die Figuren 201, 202 und 203 die in den Figuren 17, 18 und 19 gezeigten Ausführungsformen in einer Ansicht längs der Linie XX–XX in Figur 16,

Figur 21 denselben Gegenstand wie Figur 203, jedoch in einem Schnitt längs der Linie XXI–XXI in Figur 16.

In Figur 1 bezeichnet 1 einen aus Zircaloy[(R)]-Blech bestehenden Brennstoffkanal, der vierundsechzig Brennstäbe 2 umschliesst. Die Wände des Brennstoffkanals sind mit je einem sich über die gesamte vertikale Länge des Kanals erstreckenden versteifenden Rücken 3 in Form eines nach innen gebogenen Blechabschnitts oder alternativ mit einem Rücken versehen, der wie eine längs eines überwiegenden Teils der vertikalen Länge des Brennstoffkanals verlaufende Leiste 3′ aus Zircaloy® ausgebildet ist. Die Leiste 3′ kann entweder an der Aussenseite einer zusammenhängenden Blechwand festgeschweisst sein, oder es können vier derartige Leisten mit vier winkelförmigen Blechelementen derart zusammengeschweisst sein, dass ein im wesentlichen quadratischer Brennstoffkanal gebildet wird. Der Wandabschnitt, an dessen Aussenseite die Leiste 3′ festgeschweisst ist, alternativ die Leiste selbst, wird so angeordnet, dass er/sie etwas nach aussen hervorsteht, wodurch man eine geeignete Gleitfläche für die Steuerstäbe erhält. Der Brennstoffkanal ist längs eines überwiegenden Teils seiner Länge mit einer Stützanordnung 4 versehen, die aus Zircaloy® hergestellt ist und einen kreuzförmigen Querschnitt hat. Die Stützanordnung 4 besteht aus einem mittleren Wasserrohr 5 mit vier daran angeschweissten hohlen Flügeln 6, von denen jeder an einem Rücken 3 oder 3′ befestigt ist. Jeder Flügel 6 ist aus zwei parallelen, vertikalen Blechwänden 7 und einer zu diesen senkrechten und mit Abstand vom Rücken 3 oder 3′ angeordneten Wand 8 zusammengesetzt. Jede Wand 8 ist starr an einem entsprechenden Rücken 3 oder 3′ mit Hilfe mehrerer Nieten 9 befestigt, die jeweils durch einen Distanzklotz 10 hindurchgehen, wobei zwischen jeder Wand 8 und dem entsprechenden Rücken mehrere horizontale Kanäle 11 entstehen. Diese dienen als druckausgleichende, hydraulische Verbindung zwischen den vier Teilkanälen, die durch die Stützanordnung 4 abgegrenzt werden. Die unteren Enden der Stützflügel 6 sind mit Stirnwänden versehen, in denen Einlauföffnungen 12 für Wasser angeordnet sind, wobei der Hohlraum 6′ der Stützanordnung 4 in vertikaler Richtung von Wasser durchströmt wird, was eine günstige Moderatorwirkung zur Folge hat. Die Einlauföffnungen 12 stehen mit dem Übergangsstück des Brennelementbündels durch entsprechende Öffnungen in einer unteren Gitterplatte, welche die Brennstäbe 2 trägt, oder durch ein kreuzförmiges Organ ähnlicher Konstruktion wie die nachstehend beschriebene Wasserverteilungsvorrichtung 90 in Verbindung. Das Übergangsstück kann in gleicher Weise ausgeführt sein, wie das in Figur 3a gezeigte.

Statt des Aufbaus der Stützflügel als Blechkasten aus zwei Wänden 7 und 8 kann jeder Stützflügel auch aus einem einzigen, verhältnismässig dicken Blechelement (Platte) bestehen, das vorzugsweise mit mehreren vertikalen Wasserkanälen versehen ist, die beispielsweise durch Fräsen oder Bohren hergestellt werden können.

Jeder Abstandshalter umschliesst nur Brennstäbe in einem einzigen Quadranten des Brennstoffkanals 1 und liegt in einem Teilkanal, der durch zwei Stützflügel und zwei senkrecht zueinander orientierte Brennstoffkanalwandabschnitte begrenzt wird. In jedem Quadranten umschliesst eine Vielzahl solcher Abstandshalter in jeweils anderer Höhenlage sechzehn Brennstäbe. Jede solche Gruppe von Brennstäben kann dann individuell eingesetzt und herausgenommen werden.

Bei der in den Figuren 2, 3 und 3a gezeigten Ausführungsform eines Brennelementbündels nach der Erfindung ist jede Wand des Brennstoffkanals 20 mit einer einzigen, relativ langen, vertikalen Versteifungsleiste 21 versehen. Alternativ kann jede Wand statt dessen mit einem nach innen gebogenen Blechteil, das dieselbe Form wie der Rücken 3 in Figur 1 hat, oder mit mehreren vertikalen, hintereinander angeordneten Versteifungsleisten versehen sein. Die Brennstäbe des Brennelementbündels sind mit 22 bezeichnet. Das Brennelementbündel hat ein zentrales, relativ querschnittstarkes Wasserrohr 23, das zusammen mit zwölf querschnittsschwächeren Wasserrohren 24 in einer kreuzförmigen Konfiguration angeordnet ist. Die Wasserrohre 23 und 24 sind in verschiedenen Höhen durch vier wellenförmige, im wesentlichen rechtwinkelig abgebogene Bänder 25 aus Zircaloy® miteinander verbunden, die miteinander und vorzugsweise auch mit den Wasserrohren 23 und 24 zusammengeschweisst sind. Die Wasserrohre bilden somit zusammen mit den an den Wasserrohren befestigten Bändern 25 eine Stützanordnung 26, die einen im wesentlichen kreuzförmigen Querschnitt hat. Mittels der aus den Bändern 25 gebildeten Armkreuze sind die Stützflügel mit jeweils einer Versteifungsleiste 21 mechanisch fest verbunden, und zwar durch mehrere jeweils an einem Arm des Armkreuzes festgeschweisste Klötze 27, von denen jeder in ein entsprechendes Loch in der Versteifungsleiste 21 ragt und mittels einer Schweissverbindung 28 mit der Versteifungsleiste verbunden ist. Die Brennstäbe 22 sind in jedem Quadranten des Brennstoffkanals 20 mit Hilfe mehrerer, in verschiedener Höhe angeordneter Abstandshalter 29 positioniert, wobei jeder Abstandshalter nur die in dem betreffenden Quadranten angeordneten Brennstäbe umschliesst. Für jeden Quadranten bilden die Brennstäbe eine entsprechende Gruppe, und jede Gruppe kann individuell eingesetzt oder herausgenommen werden.

Alternativ können Abstandshalter verwendet werden, von denen jeder sämtliche vom Brennstoffkanal 20 umschlossenen Brennstäbe sowie die zu der Stützanordnung gehörenden Wasserrohre umschliesst.

Die Brennstäbe 22 ruhen auf einer unteren Gitterplatte 22', die von einem Übergangsstück 20' getragen wird, das mechanisch und hydraulisch mit dem Brennstoffkanal 20 verbunden ist. Das Übergangsstück 20', das an seinem unteren Ende eine Einlauföffnung für durch das Brennelementbündel hindurchströmendes Wasser hat, trägt auch eine kreuzförmige Wasserverteilungsvorrichtung 90 für das durch die Rohre 23 und 24 hindurchströmende Wasser. Die Wasserverteilungsvorrichtung 90 umfasst vier hohle, radial gerichtete und gegeneinander um 90° versetzte Arme 90'. Die Arme gehen von dem Mittelteil der Verteilungsvorrichtung aus, welche das zentrale Wasserrohr 23 trägt, das wie die Rohre 24 mit der hohlen Wasserverteilungsvorrichtung 90 hydraulisch verbunden ist. Jeder der vier Arme 90' trägt eine Gruppe von drei Wasserrohren 24. Die Wasserverteilungsvorrichtung 90 hat einen kreuzförmigen Boden 91, der vier Einlauföffnungen 92 hat. Die Arme 90' sind mit mehreren Verbindungsrohren 93 versehen, die eine hydraulische Verbindung zwischen der Verteilungsvorrichtung 90 und den ausserhalb des Brennelementbündels liegenden Wasserspalten herstellen.

Bei anderen Ausführungsformen der Erfindung haben die Übergangsstücke der Brennelementbündel eine ähnliche Konstruktion wie das gezeigte Übergangsstück 20'. In einigen Fällen, besonders dann, wenn die vertikalen Kanäle der Stützanordnung über mehrere Öffnungen in den Wänden des Brennstoffkanals hydraulisch mit der Aussenseite des Brennelementbündels verbunden sind, kann man eine alternative Ausführungsform verwenden, bei der die Verbindungsrohre 93 und die Böden 91 entfallen.

Bei der in den Figuren 4 und 5 gezeigten Ausführungsform werden die Brennstäbe 31 des Brennelementbündels von einem Brennstoffkanal 30 umschlossen, wobei jede Wand mit einem versteifenden Rücken in Form einer festgeschweissten Versteifungsleiste 32 versehen ist. Alternativ kann die Leiste 32 durch einen nach innen gebogenen Wandabschnitt ersetzt werden. In gleicher Weise wie in Figur 3 ist ein relativ querschnittsstarkes Wasserrohr 34 zusammen mit zwölf querschnittskleineren Wasserrohren 35 in einer kreuzförmigen Konfiguration angeordnet. In mehreren verschiedenen Höhenbereichen sind zwischen benachbarten Wasserrohren mechanische Verbindungselemente 36 angebracht, wobei diese Wasserrohre zusammen mit den Verbindungselementen 36 eine versteifende Stützanordnung 37 bilden, die einen im wesentlichen kreuzförmigen Querschnitt hat. Der Abstand zwischen den einzelnen Höhenbereichen ist mindestens genauso gross, wie die vertikale Erstreckung des Verbindungselementes 36, wodurch man gute hydraulische Verbindungen zwischen benachbarten Quadranten des Brennstoffkanals und dadurch einen effektiven Druckausgleich zwischen diesen erhält. Jedes Verbindungselement 36 bildet einen spitzen Winkel mit einer Vertikalebene durch den zugehörigen Stützflügel, wodurch das Reaktorkühlmittel beim Vorbeiströmen an einem Verbindungselement eine horizontale Geschwindigkeitskomponente erhält. Wie aus Figur 5 ersichtlich ist, ist die Schrägstellung der zu demselben Stützarm gehörenden Verbindungselemente im gezeigten Ausführungsbeispiel in verschiedenen Richtungen ausgeführt. Zweckmässigerweise können die in demselben Arm unmittelbar nebeneinander angeordneten Elemente mit einer von Element zu Element wechselnden Ablenkrichtung ausgeführt werden, wie es in Figur 5 angedeutet ist. Die horizontalen Geschwindigkeitskomponenten bewirken, dass sich ein Kühlwasserfluss, der in einem unteren Abschnitt des Brennkanals auf einen bestimmten Brennstab lokalisiert ist, weiter oben auf mehrere Brennstäbe verteilen kann, wodurch man eine gleichmässigere Temperaturverteilung erzielt.

Statt die Verbindungselemente 36 direkt an die Wasserrohre zu schweissen, kann man vorzugsweise auch die Rohre mit Buchsen 39 versehen und die Verbindungselemente an diesen Buchsen festschweissen, so wie es Figur 6 zeigt.

Jeder Quadrant des Brennstoffkanals enthält ein Bündel von sechszehn Brennstäben. Diese werden von mehreren vertikal hintereinander angeordneten Abstandshaltern 38 umschlossen, wobei jeder Abstandshalter mit nur sechszehn Abstandshalterzellen ausgeführt ist.

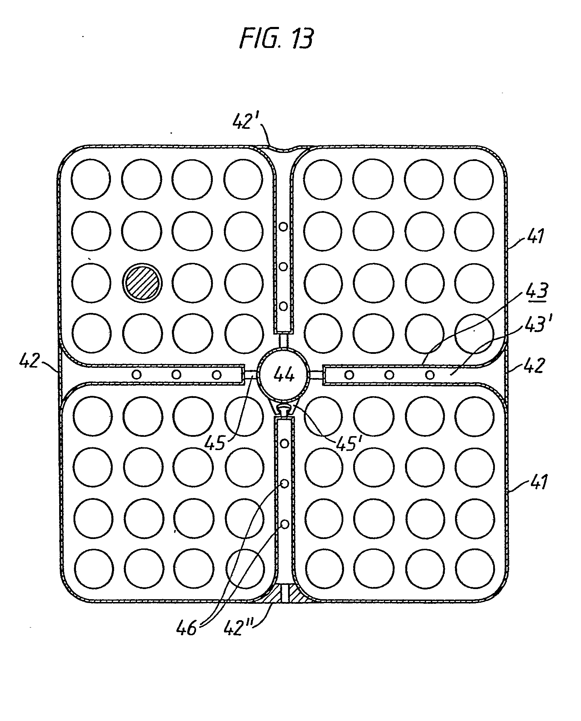

Bei dem in Figur 13 gezeigten Brennelementbündel haben die Wände des Brennstoffkanals 41 des Brennelementbündels jeweils einen stark nach innen gebogenen Mittelabschnitt, wodurch vier hohle Stützflügel 43 gebildet werden. Jeder dieser Stützflügel ist an einem zentralen Wasserrohr 44 mit Hilfe mehrerer vertikal verteilter starrer bzw. flexibler Verbindungsvorrichtungen 45 bzw. 45' befestigt. Die Hohlräume der Stützflügel bilden vertikale, innere Wasserkanäle 43', denen Wasser mit relativ niedriger Temperatur über mehrere Öffnungen 46 in der unteren Gitterplatte des Brennelementbündels zugeführt wird. Die Kanäle 43' können ohne hydraulische Direktverbindung mit den Wasserspalten ausgeführt sein, die bei einer konventionellen Anordnung zwischen benachbarten Brennelementbündeln im Reaktorkern vorhanden sind. Zu diesem Zweck kann jeder Kanal 43' seitlich mit Hilfe einer angeschweissten Kanalwand 42, die keine durchgehenden Löcher zum Steuerstabspalt hat, geschlossen werden. Alternativ kann eine mit Verbindungslöchern versehene Kanalwand 42" verwendet werden. Bei der Bestimmung der Dicke der Kanalwand 42 bzw. 42" ist davon auszugehen, dass der Reaktor erdbebensicher sein soll. Sind die sich hieraus ergebenden Anforderungen verhältnismässig gering, dann können die Kanalwände 42 und 42" auch ganz fortgelassen werden, oder es können an Stelle der Wände 42 oder 42" mehrere vertikal hintereinander und in bedeutendem Abstand voneinander angeordnete Verbindungselemente 42' verwendet werden, die beispielsweise gebogen sind. Hierdurch kann eine unnötig grosse Starrheit des Brennelementbündels verhindert werden, und an den Kontaktflächen zwischen Brennelementbündel und Steuerstab kann eine geringere Reibungskraft erreicht werden.

Eine Konstruktion gemäss Figur 13 hat den Vorteil, dass Brennstoffkanäle für verschiedene Reaktoren mit sehr unterschiedlichen Anforderungen hinsichtlich ihrer möglichen Erdbebenbelastung im wesentlichen auf dieselbe Weise, mit denselben Werkzeugen und aus demselben Material hergestellt werden können. Die Anpassung an die individuellen Anforderungen erfolgt dann durch geeignete Bemessung der Kanalwände 42 oder 42" oder der Verbindungselemente 42', wenn man diese anwenden will.

In den Figuren 14 und 15 bezeichnet 51 einen Brennstoffkanal, der vierundsechzig vertikale Brennelemente 52 enthält, die mit Hilfe mehrerer, nicht gezeigter Abstandshalter der in Figur 4 gezeigten Art positioniert sind. Der Brennstoffkanal enthält ferner zwölf Wasserrohre 54 mit einem verhältnismässig kleinen Querschnitt und ein zentrales Wasserrohr 53 mit einem verhältnismässig grossen Querschnitt. Auf einem unteren Niveau haben jeweils sechs Wasserrohre 54 einen abgeflachten Abschnitt 58, während das mittlere Wasserrohr 53 einen abgeflachten Abschnitt 59 hat. Entsprechende abgeflachte Abschnitte 58' und 59' gibt es auf einem oberen Niveau.

Auf dem genannten unteren Niveau sind die abgeflachten Rohrabschnitte 58 und 59 zwischen zwei im wesentlichen geraden, horizontalen Schienen 55 festgeklemmt, und auf einem oberen Niveau sind zwei Schienen 55' in entsprechender Weise angeordnet. Von oben gesehen, bilden die Schienen 55 mit den Schienen 55' einen Winkel von 90°. Vier vertikale Schienen 57 gehören jeweils zu einer Brennstoffkanalwand, wobei jede der horizontalen Schienen 55 an ihren Enden mit Hilfe von Schrauben 60 an zwei einander gegenüberstehenden Schienen 57 befestigt ist. Eine Vielzahl von horizontalen Schienen 55 ist an jeder der Schienen 57 befestigt. Durch die Ausführung nach Figur 14 und 15 erzielt man einen grösseren Mindestabstand zwischen den Verbindungsvorrichtungen der Wasserrohre und den am nächsten liegenden Brennstäben als bei den in den Figuren 3 und 4 gezeigten Ausführungsformen, was vorteilhaft ist.

In Figur 16 bezeichnet 70 einen Brennstoffkanal mit einem im wesentlichen quadratischen Querschnitt. Der Brennstoffkanal umschliesst vier Gruppen von Brennstäben 74 und ist mit Hilfe einer hohlen, mit kreuzförmigem Querschnitt ausgeführten versteifenden Stützvorrichtung in vier Teilkanäle 72 aufgeteilt. Die Stützanordnung hat vier Flügel 73, deren vertikale Länge der Länge der Brennstäbe 74 entspricht. Jeder der Flügel 73 enthält einen sich längs der ganzen Länge des Flügels erstreckenden und von parallelen Blechabschnitten begrenzten vertikalen Strömungsweg 74' für Wasser. Diese Strömungswege 74' bilden zusammen mit einem zentralen Strömungsweg 74" den gesamten Kanalquerschnitt der Stützanordnung. Die Stützanordnung ist aus vier langgestreckten, vertikalen Blechkörpern 75, 75', 75" und 75''' mit L-förmigem Querschnitt zusammengesetzt. Jeder Flügel 73 enthält zwei parallele, im Abstand voneinander angeordnete Blechabschnitte, die zu dem zugehörigen Blechkörper 75 gehören. Jeder der beiden einander gegenüberliegenden Blechabschnitte des Flügels ist mit mehreren gestanzten, nach innen gerichteten Stutzen 71 versehen, wobei jeder Stutzen 71 des einen Blechabschnittes mit einem entsprechenden Stutzen 71 des anderen Blechabschnittes fluchtet und beide Stutzen mittels einer ringförmigen Schweissnaht 71' zusammengeschweisst sind. Die somit zusammengeschweissten Stutzen 71 bilden an jedem Flügel 73 eine Vielzahl von hydraulischen Verbindungen zwischen den auf jeder Seite des Flügels befindlichen Teilkanälen 72.

Jeder Blechkörper 75, 75', 75" und 75''' ist mit der ihm zugeordneten Wand des Brennstoffkanals 70 verbunden gemäss einer der in den Figuren 17, 18 und 19 gezeigten alternativen Ausführungsformen, wobei diese Figuren die Verbindungsstelle im Horizontalschnitt im vergrösserten Massstab zeigen. Bei den in Figur 17 und 18 gezeigten Alternativen besteht der Brennstoffkanal 70 im wesentlichen aus vier gleichen Blechkörpern 76, mit L-förmigem Querschnitt, von denen jeder eine der vier Eckabschnitte des Brennstoffkanals enthält. Im Mittelteil jeder Brennstoffkanalwand sind zwei Blechkörper 76 miteinander verbunden, und zwar entweder mit Hilfe einer vertikalen, zwischen den Blechkörpern 76 festgeschweissten Schiene 77 oder mit Hilfe eines vertikalen Blechstreifens 78. Die Schiene 77 bzw. der Blechstreifen 78 ist mit mehreren gleichmässig über die Länge des Brennstoffkanals verteilten Öffnungen 79 bzw. 80 versehen, durch welche der vertikale, durch die Blechkörper 75, 75', 75" und 75''' abgegrenzte Wasserkanal horizontal mit dem ausserhalb des Brennstoffkanals liegenden Raum in Verbindung steht. Die Blechkörper 75, 75', 75" und 75''' sind an den Schienen 77, alternativ an den Blechstreifen 78 und den Blechkörpern 76 festgeschweisst.

Bei der in Figur 19 gezeigten Alternative ist der Brennstoffkanal ohne eingesetzte Mittelteile in den Wänden aufgebaut. Jede der vier Wände ist mit einer im Mittelabschnitt angebrachten vertikalen Reihe von gestanzten Stutzen 81 versehen. An jeder der vier Wände des Brennstoffkanals 70 sind mehrere in einer vertikalen Reihe angeordnete hydraulische Verbindungen 82 zwischen zwei auf jeder Seite eines entsprechenden Flügels liegenden Teilkanälen vorgesehen. Die Verbindungen 82 sind in entsprechender Weise ausgeführt, wie die oben beschriebenen aus den Stutzen 71 gebildeten Verbindungen, wobei ausgekragte Blechteile mit einer Schweissnaht 82' zusammengeschweisst sind. Zwischen den Verbindungen 82 sind die Stutzen 81 hydraulisch an einen Flügel 73 angeschlossen und an demselben festgeschweisst.

Bei sämtlichen Ausführungsformen macht der gesamte durchschnittliche Querschnitt der vertikalen Wasserdurchströmungswege der Stützanordnung einen dominierenden Teil des durchschnittlichen Gesamtquerschnitts der Stützanordnung aus.

Wie aus dem Vorgesagten hervorgeht, eignen sich sämtliche in den Figuren gezeigten Ausführungsbeispiele eines Brennelementbündels nach der Erfindung zur Vierteilung des Brennstoffes. Die von dem Brennstoffkanal umschlossenen Brennstäbe sind dabei in vier gleich grosse Bündel aufgeteilt, wobei jeder Abstandshalter so ausgeführt ist, dass er nur einen kleineren Teil, normalerweise ¼ der Gesamtanzahl von Brennstäben im Brennelementbündel positioniert. Bei der Verwendung derartiger Abstandshalter ist es möglich, von dem bekannten Prinzip abzuweichen, wonach die Anzahl in ein und derselben Horizontalebene angeordneter Abstandshalterzellen mit der Gesamtanzahl von Brennstäben im Brennstoffkanal übereinstimmt. Es hat sich herausgestellt, dass man dadurch eine Reihe verschiedener Vorteile erzielen kann. Ein Brennelementbündel nach der Erfindung ist vorzugsweise so aufgebaut, dass eine Vielzahl von Gruppen der vorgenannten, teilweise positionierenden Abstandshalter axial hintereinander im Brennstoffkanal angeordnet ist, wobei jede Gruppe mehrere, auf mindestens zwei verschiedenen Niveaus angeordnete Abstandshalter enthält und wobei die Abstandshalter der Gruppe zusammen sämtliche von dem Brennstoffkanal umschlossenen Brennstäbe umschliesst.

Beispiele für die Anordnung derart ausgeführter Brennelementbündel sind schematisch in den Figuren 7, 8, 9, 10, 11 und 12 gezeigt, wobei die vier Quadranten des Brennstoffkanals mit A, B, C und D bezeichnet sind und jeder Abstandshalter mit S und einem Index bezeichnet ist. Jede der vorgenannten Gruppen von teilweise positionierenden Abstandshaltern hat einen für die Gruppe charakteristischen Index.

Die anhand der Figuren 7 bis 12 beschriebene Anordnung der Abstandshalter bietet mehrere Vorteile, und zwar unter anderem eine verbesserte Wasserverteilung zwischen Brennelementbündelabschnitten mit unterschiedlichen Belastungen.

In den Figuren 8, 10 und 12 erkennt man die Anordnung von vertikal hintereinander liegenden Gruppen von Teilabstandshaltern in einem Brennelementbündel. Dabei sind die Vertikalschnitte durch die einzelnen Quadranten A, B, C, D der Brennelementbündel der besseren Übersicht halber in den Figuren 8, 10 und 12 nebeneinander dargestellt. Die wirkliche Lage der Quadranten im Verhältnis zu einander geht aus den entsprechenden horizontalen Schnitten hervor, die in den Figuren 7, 9 und 11 angedeutet sind.

Wie in den Figuren 11 und 12 angedeutet, kann ein Brennelementbündel mit im wesentlichen quadratischem Querschnitt mit einer Vielzahl von axial hintereinander angeordneten Gruppen aus je vier Teilabstandshaltern versehen werden, von denen jeder in je einer Ecke des Brennelementbündels angeordnet ist, wobei jeder Teilabstandshalter eine Anzahl von Brennstäben umschliesst, die grösser ist als ¼ der Gesamtzahl der Brennstäbe im Brennelementbündel.

**Patentansprüche**

1. Brennelementbündel für einen Siedewasserreaktor, dessen Brennstoffkanal (1; 20; 30; 41; 51; 70) einen im wesentlichen quadratischen Querschnitt hat und eine Vielzahl von vertikalen Brennstäben (2; 22; 31; 52; 74) umschliesst, welche mit Hilfe mehrerer Abstandshalter (29; 38) im Brennstoffkanal positioniert sind, wobei der Brennstoffkanal eine langgestreckte, sich über den überwiegenden Teil der Brennstablänge erstreckende versteifende Stützanordnung (4; 26; 37) enthält, deren vertikale Mittellinie in oder nahe der vertikalen Mittellinie des Brennstoffkanals liegt, welche Stützanordnung vier in um ca. 90° gegeneinander versetzten Vertikalebenen liegende Flügel (6; 43; 73) hat, die mechanisch mit je einer Wand des Brennstoffkanals verbunden sind, wobei die Flügel als Begrenzungswände zwischen vier Teilkanälen dienen und jeder Flügel mindestens einen vertikalen Wasserdurchströmungsweg (6'; 24; 35; 43'; 54; 74) enthält, dessen unteres Ende mit einer Einlauföffnung versehen ist, dadurch gekennzeichnet, dass die vier Flügel (6; 43; 73) in der Nähe der vertikalen Mittellinie des Brennstoffkanals derart mechanisch miteinander verbunden sind, dass der Brennstoffkanal sich während des Betriebes nicht nach aussen verformen kann.

2. Brennelementbündel nach Anspruch 1, dadurch gekennzeichnet, dass mindestens einer der genannten Wasserdurchströmungswege in hydraulischer Verbindung mit der Umgebung des Brennelementbündels über eine Vielzahl vertikal nebeneinander angeordneter Öffnungen (79, 80, 81) steht.

3. Brennelementbündel nach Anspruch 1 oder 2, dadurch gekennzeichnet, dass der gesamte durchschnittliche Querschnitt der vertikalen Wasserdurchströmungswege der Stützanordnung einen dominierenden Teil des gesamten durchschnittlichen Querschnitts der Stützanordnung ausmacht.

4. Brennelementbündel nach einem der vorhergehenden Ansprüche, dadurch gekennzeichnet, dass jeder Flügel zwei langgestreckte, vertikale, zueinander parallele und im Abstand voneinander angeordnete Blechteile (7) enthält, die zwischen sich den Wasserdurchströmungsweg abgrenzen.

5. Brennelementbündel nach einem der vorhergehenden Ansprüche, dadurch gekennzeichnet, dass die Stützanordnung auf mehreren verschiedenen Niveaus (in verschiedenen Höhen) mit mehreren hydraulischen Verbindungen (10; 71) zwischen den Teilbrennstoffkanälen versehen ist.

6. Brennelementbündel nach einem der vorhergehenden Ansprüche, dadurch gekennzeichnet, dass die Stützanordnung mit ihren vier Flügeln durch vier langgestreckte, vertikale Blechkörper mit L-förmigem Querschnitt gebildet wird, deren Ecken in der Nähe der vertikalen Mittellinie des Brennstoffkanals liegen (Figur 16).

7. Brennelementbündel nach Anspruch 6, dadurch gekennzeichnet, dass mindestens einer der Flügel von einem Paar paralleler, jeweils zu einem L-förmigen Blechkörper gehörender Blechteile gebildet wird, die mechanisch miteinander über mehrere Paare ins Innere des vom Flügel gebildeten Durchströmungsweges gerichtete Stutzen (71) verbunden sind, welche in den zugehörigen L-förmigen Körper gestanzt und paarweise zusammengeschweisst sind.

8. Brennelementbündel nach Anspruch 7, dadurch gekennzeichnet, dass die genannte paarweise Zusammenschweissung der Stutzen (71) in der Weise erfolgt, dass sie eine hydraulische Verbindung zwischen den von dem Flügel begrenzten beiden Teilkanälen (72) bilden.

9. Brennelementbündel nach Anspruch 7 oder 8, dadurch gekennzeichnet, dass die Wasserdurchströmungswege jedes der Flügel über eine Vielzahl übereinander angeordneter Öffnungen (79, 80) mit der Umgebung des Brennelementbündels in Verbindung stehen.

10. Brennelementbündel nach einem der Ansprüche 7 bis 9, dadurch gekennzeichnet, dass jeder Flügel in horizontaler Richtung von mehreren kurzen horizontalen Kanälen (82) durchdrungen ist und dass diese Kanäle übereinander nahe der Seitenwand des Brennstoffkanals liegen, wobei jeder kurze Kanal (82) zum Teil von der genannten Seitenwand des Brennstoffkanals begrenzt wird.

11. Brennelementbündel nach einem der Ansprüche 1 bis 5, dadurch gekennzeichnet, dass jede Brennstoffkanalwand ein nach innen gebogenes Mittelteil hat, das einen auf die vertikale Mittellinie des Brennstoffkanals gerichteten, U-förmigen Vorsprung (Stützflügel) (43) bildet, der mechanisch mit einem vertikal verlaufenden zentralen Wasserrohr (44) verbunden ist.

12. Brennelementbündel nach einem der Ansprüche 1 oder 3, dadurch gekennzeichnet, dass mehrere vertikale Wasserrohre (24; 35; 54) in einer kreuzförmigen Konfiguration angeordnet und in jedem von mehreren unterschiedlichen Niveaubereichen mit einer Vielzahl horizontal verlaufender mechanischer Verbindungselemente (25; 36; 55) versehen sind, wobei die Wasserrohre zusammen mit den Verbindungselementen die Stützanordnung bilden.

13. Brennelementbündel nach einem der vorhergehenden Ansprüche, dadurch gekennzeichnet, dass die in dem Brennstoffkanal befindlichen Brennstäbe auf vier gleiche Bündel verteilt sind, die durch die Flügel voneinander getrennt sind, wobei jedes Bündel von mehreren vertikal hintereinander angeordneten Abstandshaltern (29; 38; $S_1$, $S_2$) umschlossen wird, von denen jeder nur einen kleineren Teil der Gesamtanzahl der Brennstäbe im Brennelementbündel positioniert, und dass mehrere Gruppen solcher Abstandshalter axial hintereinander im Brennstoffkanal angeordnet sind, wobei zu jeder Gruppe mehrere, auf mindestens zwei verschiedenen Niveaus angeordnete Abstandshalter gehören und die Abstandshalter der ganzen Gruppe zusammen sämtliche der von dem Brennstoffkanal umschlossenen Brennstäbe positionieren.

14. Brennelementbündel nach Anspruch 12, dadurch gekennzeichnet, dass mehrere der mechanischen Verbindungselemente (36) gegenüber der Vertikalrichtung derart geneigt angeordnet sind, dass nach oben strömendes Wasser eine horizontale Geschwindigkeitskomponente erhält (Fig. 5 und 6).

15. Brennelementbündel nach Anspruch 12, dadurch gekennzeichnet, dass jedes der horizontal verlaufenden Verbindungselemente aus einer im wesentlichen horizontal angeordneten Schiene besteht, dass zwei solcher Schienen (55), die ein erstes Paar bilden, auf einem ersten Niveau liegen und jede Schiene des Paares auf je einer Seite einer ersten Gruppe von in einer ersten Vertikalebene angeordneten Wasserrohren liegen, dass ein zweites Paar solcher Schienen (55') auf einem zweiten Niveau liegt und jede Schiene dieses Paares auf je einer Seite einer zweiten in einer zweiten Vertikalebene angeordneten Gruppe von Wasserrohren liegen, dass die beiden Vertikalebenen einen Winkel von 90° miteinander bilden und dass die Wasserrohre an den Stellen, an denen sie zwischen einem Schienenpaar liegen, abgeflachte Abschnitte (58; 59; 58'; 59') haben, die ebene Anlageflächen für die Schienen bilden.

16. Brennelementbündel nach einem der vorhergehenden Ansprüche, dadurch gekennzeichnet, dass jede Wand des Brennstoffkanals mit einem nach innen gerichteten, vertikal verlaufenden, versteifenden Rücken (3; 21) versehen ist, der mit einem der genannten Flügel mechanisch verbunden ist.

17. Brennelementbündel nach Anspruch 16, dadurch gekennzeichnet, dass der Rücken aus einem nach innen gebogenen Wandabschnitt (3) besteht.

18. Brennelementbündel nach Anspruch 16, dadurch gekennzeichnet, dass der Rücken eine vertikale Leiste (3'; 21) enthält.

19. Brennelementbündel nach Anspruch 18, dadurch gekennzeichnet, dass die vertikale Leiste (3'; 21) eine nach aussen gerichtete ebene Fläche hat, deren Abstand von der vertikalen Mittelachse des Brennstoffkanals etwas grösser ist als der entsprechende Abstand der Ebene, in der die übrigen nach aussen gerichteten ebenen Flächen der zugehörigen Kanalwand liegen.

**Claims**

1. Fuel assembly for a boiling water reactor the fuel channel (1; 20; 30; 41; 51; 70) of which is formed with a substantially square cross-section and surrounds a plurality of vertical fuel rods (2; 22; 31; 52; 74), which are positioned in the fuel channel with the help of several spacers (29; 38), whereby the fuel channel comprises an elongated stiffening device (4; 26; 37) extending along a predominant portion of the length of the fuel rods, the vertical center line of said stiffening device lying in or near the vertical center line of the fuel channel, said stiffening device having four wings (6; 43; 73) arranged in four vertical planes spaced against each other at 90° and each being mechanically connected to a corresponding wall of said fuel channel, thus serving as dividing walls between four partial channels, whereby each wing is formed with at least one vertical water passageway (6'; 24; 35; 43'; 54; 74) the lower end of which is provided with an inlet opening, characterized in that said four wings (6; 43; 73) are mechanically connected to each other near the vertical center line of the fuel channel in such a way, that the fuel channel is uncapable of being deformed outwardly under operation.

2. Fuel assembly according to claim 1, characterized in that at least one of said water passageways is hydraulically connected with the surroundings of the fuel assembly via a plurality of openings (79, 80, 81) arranged vertically one after the other.

3. Fuel assembly according to claim 1 or 2, characterized in that the total average cross-section of the vertical water passageways of said stiffening device constitutes a dominant portion of the total average cross section of said stiffening device.

4. Fuel assembly according to any of the preceding claims, characterized in that each wing comprises two elongated, vertical, mutually parallel and mutually spaced-apart sheet-metall portions forming between themselves said water passageway.

5. Fuel assembly according to any of the preceding claims, characterized in that said stiffening device is provided with a plurality of hydraulic connections (10, 71) between said partial fuel channels at a plurality of different levels (at different altitudes).

6. Fuel assembly according to any of the preceding claims, characterized in that said stiffening device with its four wings is formed by four elongated sheet-metal bodies of L-shaped cross-section the edges of which lie in the vicinity of the vertical center line of said fuel channel (Figure 16).

7. Fuel assembly according to claim 6, characterized in that at least one of said wings is formed by a pair of parallel sheet-metal portions each belonging to one of said L-shaped sheet-metal bodies, said sheet-metal portions being mechanically connected with one another with the help of a plurality of pairs of connection pieces (71) projecting into the passageway formed by the wing, being pressed into the L-shaped body, and being connected in pairs by welding.

8. Fuel assembly according to claim 7, characterized in that said weld connection of pairs of connection pieces (71) is of such type that it forms a hydraulic connection between the two partial channels (72) separated by the wing.

9. Fuel assembly according to claim 7 or 8, characterized in that the water passageways of each wing are connected with the surroundings of the fuel assembly via a plurality of openings (79, 80) arranged vertically one after the other.

10. Fuel assembly according to any of claim 7 through 9, characterized in that each wing is penetrated horizontally by a plurality of short horizontal channels (82), and that these channels are positioned vertically one after the other near the side wall of the fuel channel, whereby each of said short channels (82) is partially defined by said side wall of the fuel channel.

11. Fuel assembly according to any of claim 1 through 5, characterized in that each of the walls of the fuel channel has an inwardly-folded midportion, which forms a U-shaped projection (supporting wing) (43) directed towards the vertical center line of the fuel channel and being mechanically connected to a vertically extending central water tube (44).

12. Fuel assembly according to any of claim 1 through 3, characterized in that a plurality of water tubes (24; 35; 54) are arranged in a cruciform configuration and are provided at each of several separate level sections with a plurality of horizontally extending mechanical connecting elements (25; 36; 55), whereby said water tubes together with said connecting elements constitute said stiffening device.

13. Fuel assembly characterized in that the fuel rods placed in said fuel channel are divided into four equal bundles separated from each other by said wings, whereby each bundle is surrounded by a plurality of spacers (29; 38; $S_1$, $S_2$) arranged vertically one after the other each of said spacers positioning only a minor portion of the total number of fuel rod in said fuel assembly, and that a plurality of groups of such spacers are arranged axially one after the other in the fuel channel, whereby each of said groups contains a plurality of spacers arranged on at least two different levels, and whereby the spacers of the entire group together position all fuel rods surrounded by the fuel channel.

14. Fuel assembly according to claim 12, characterized in that a plurality of said mechanical connecting elements (36) are obliquely arranged in relation to the vertical direction in such a way that upwardly flowing water aquires a horizontal speed component (Figures 5 and 6).

15. Fuel assembly according to claim 12, characterized in that each of said horizontally extending connecting elements consists of a substantially horizontally arranged bar, that two of said bars (55), forming a first pair, are arranged on a first level, each bar of said pair being positioned on one side of a first group of water pipes located in a first vertical plane, that a second pair of said bars (55') is arranged on a second level each bar of this pair being positioned on one side of a second group of water pipes arranged in a second vertical plane, that said two vertical planes form an angle of 90° between each other, and that said water pipes are provided with flattened portions in those areas where they are positioned between the pair of bars said flattened portions constituting plane contact surfaces for the rails.

16. Fuel assembly according to any of the preceding claims, characterized in that each of the walls of the fuel channel is provided with an inwardly-directed, vertically extending stiffening ridge (3; 21) which is mechanically connected to one of said wings.

17. Fuel assembly according to claim 16, characterized in that said ridge consists of an inwardly bent wall portion (3).

18. Fuel assembly according to claim 16, characterized in that said ridge comprises a vertical strip (3'; 21).

19. Fuel assembly according to claim 18, characterized in that said vertical strip has an outwardly-facing plane surface the distance of which from the vertical center line of the fuel channel is slightly greater than the corresponding distance of the plane in which the other outwardly-facing plane surfaces of the corresponding channel wall are positioned.

## Revendications

1. Assemblage combustible pour un réacteur à eau bouillante, dont le conduit pour le combustible (1; 20; 30; 41; 51; 70) possède une section transversale essentiellement carrée et entoure un grand nombre de crayons de combustible verticaux (2; 22; 31; 52; 74), qui sont positionnés à l'aide de plusieurs entretoises (29; 38) dans le conduit pour combustible, le conduit pour combustible contenant un dispositif allongé de support (4; 26; 37) ayant une action de rigidification et s'étendant sur la majeure partie de la longueur des crayons de combustible et dont l'axe médian vertical est confondu avec l'axe médian vertical du conduit pour combustible ou est proche de ce dernier, lequel dispositif de support possède quatre ailes (6; 43; 73) situées dans des plans verticaux décalés d'environ 90° les uns par rapport aux autres et reliées mécaniquement à des parois respectives du conduit pour combustible, les ailes servant de parois limites entre des éléments de conduit et chaque aile contenant au moins un passage vertical de circulation d'eau (6'; 24; 35; 43'; 54; 74), dont l'extrémité inférieure est munie d'une ouverture d'admission, caractérisé par le fait que les quatre ailes (6; 43; 73) sont reliées entre elles mécaniquement à proximité de l'axe médian vertical du conduit pour combustible, de telle sorte que le conduit pour combustible ne peut pas se déformer vers l'extérieur pendant le fonctionnement.

2. Assemblage combustible suivant la revendication 1, caractérisé par le fait qu'au moins l'un desdits passages de circulation de l'eau est relié, selon une liaison hydraulique, à l'environnement de l'assemblage combustible par l'intermédiaire d'un grand nombre d'ouvertures (79, 80, 81) disposées verticalement côte-à-côte.

3. Assemblage combustible suivant la revendication 1 ou 2, caractérisé par le fait que l'ensemble de la section transversale moyenne des passages verticaux de circulation de l'eau du dispositif de support occupe une partie prépondérante de l'ensemble de la section transversale moyenne du dispositif de support.

4. Assemblage combustible suivant l'une des revendications précédentes, caractérisé en ce que chaque aile contient deux éléments de tôle (7) allongés verticaux, parallèles entre eux et à distance l'un de l'autre et qui limitent entre eux le passage de circulation de l'eau.

5. Assemblage combustible suivant l'une des revendications précédentes, caractérisé par le fait que le dispositif de support comporte plusieurs niveaux différents (à des hauteurs différentes) comprenant plusieurs liaisons hydrauliques (10; 71) entre les éléments de conduit pour combustible.

6. Assemblage combustible suivant l'une des revendications précédentes, caractérisé par le fait que le dispositif de support muni de ses quatre ailes est formé par quatre corps en tôle allongés et verticaux possédant une section transversale en forme de L et dont les angles sont situés à proximité de l'axe médian vertical du conduit pour combustible (figure 16).

7. Assemblage combustible suivant la revendication 6, caractérisé par le fait qu'au moins l'une des ailes est formée par un couple de pièces en tôle parallèles, appartenant respectivement à un corps en tôle en forme de L et qui sont reliées entre elles mécaniquement par l'intermédiaire de plusieurs couples de tubulures (71) dirigées à l'intérieur du passage de circulation formé par les ailes, et qui sont formées par découpage dans les corps en forme de L associés et sont réunis par couples par soudage.

8. Assemblage combustible selon la revendication 7, caractérisé par le fait que ledit assemblage soudé par couples des tubulures (71) est réalisé de telle sorte qu'elles établissent une liaison hydraulique entre les deux éléments de conduite (72) limités par l'aile.

9. Assemblage combustible suivant la revendication 7 ou 8, caractérisé par le fait que les passages de circulation d'eau de chacune des ailes sont reliés par l'intermédiaire d'un grand nombre d'ouvertures superposées (79, 80) à l'environnement de l'assemblage combustible.

10. Assemblage combustible suivant l'une des revendications 7 à 9, caractérisé par le fait que chaque aile est traversée suivant la direction horizontale par plusieurs canaux horizontaux courts (82), et que ces canaux sont superposés au voisinage de la paroi latérale du conduit pour combustible, chaque canal court (82) étant limité en partie par ladite paroi latérale du conduit pour combustible.

11. Assemblage combustible suivant l'une des revendications 1 à 5, caractérisé par le fait que chaque paroi du conduit pour combustible possède une partie centrale repliée vers l'intérieur et qui forme une partie saillante en forme de U (aile de soutien) (43) dirigée vers l'axe médian vertical du conduit pour combustible et qui est reliée mécaniquement à un tube central vertical de circulation d'eau (44).

12. Assemblage combustible suivant l'une des revendications 1 ou 3, caractérisé par le fait que plusieurs tubes verticaux de circulation d'eau (24; 35; 54) sont disposés selon une configuration cruciforme et sont munis, dans chaque zone de niveau faisant partie de plusieurs zones de niveau différentes, d'un grand nombre d'organes de liaison mécaniques horizontaux (25; 36; 55), les tubes de circulation d'eau constituant, avec les organes de liaison, le dispositif de support.

13. Assemblage combustible suivant l'une des revendications précédentes, caractérisé par le fait que les crayons de combustible situés dans le conduit pour combustible sont répartis en quatre assemblages identiques, qui sont séparés les uns des autres par les ailes, chaque assemblage étant entouré par plusieurs entretoises disposées les unes au-dessus des autres verticalement (29; 38; $S_1$; $S_2$) et dont chacune positionne seulement une assez faible partie du nombre total des crayons de combustible présents dans l'assemblage combustible, et que plusieurs groupes de telles entretoises sont disposés axialement les unes derrière les autres dans le conduit pour combustible, plusieurs entretoises disposées au moins à deux niveaux différents appartenant à chaque groupe, et les entretoises de l'ensemble du groupe positionnant tous les crayons de combustible entourés par le conduit pour combustible.

14. Assemblage combustible suivant la revendication 2, caractérisé par le fait que plusieurs des organes de liaison mécaniques (36) sont disposés en étant inclinés par rapport à la verticale de telle sorte que l'eau circulant vers le haut reçoit une composante horizontale de vitesse (figures 5 et 6).

15. Assemblage combustible suivant la revendication 12, caractérisé par le fait que chacun des organes de liaison horizontaux est constitué par un rail disposé essentiellement horizontalement, que deux tels rails (55), qui forment un premier groupe, sont situés à un premier niveau et que les rails du couple sont situés sur les côtés respectifs d'un premier groupe de tubes de circulation d'eau disposés dans un premier plan vertical, qu'un second couple de tels rails (55') est situé à un second niveau et que les rails de ce couple sont situés sur les côtés respectifs d'un second groupe de tubes de circulation d'eau, disposés dans un second plan vertical, que les deux plans verticaux font entre eux un angle de 90° et que les tubes de circulation d'eau possèdent, au niveau d'emplacements auxquels ils sont situés entre un couple de rails, des sections aplaties (58; 59; 58'; 59') qui forment les surfaces planes d'application pour des rails.

16. Assemblage combustible suivant l'une des revendications précédentes, caractérisé par le fait que chaque paroi du conduit pour combustible est munie d'une partie verticale en forme de nervure (3; 21) dirigée vers l'intérieur et réalisant une rigidification et qui est reliée mécaniquement à l'une desdites ailes.

17. Assemblage combustible suivant la revendication 7, caractérisé par le fait que la partie en forme de nervure est constituée par un élément de paroi (3) replié vers l'intérieur.

18. Assemblage combustible suivant la revendication 16, caractérisé par le fait que la partie en forme de nervure contient une baguette verticale (3'; 21).

19. Assemblage combustible suivant la revendication 18, caractérisé par le fait que la barrette verticale (3'; 21) possède une surface plane tournée vers l'extérieur et dont la distance par rapport à l'axe médian vertical du conduit pour combustible est légèrement supérieure à la distance correspondante du plan dans lequel sont situées les autres surfaces planes, tournées vers l'extérieur, de la paroi associée du canal.

FIG. 1

0 036 142

FIG. 2

FIG. 3

11

FIG. 3a

## FIG. 4

## FIG. 5

## FIG. 6

0 036 142

FIG. 7

FIG. 9

FIG.11

FIG. 8

FIG. 10

FIG. 12

17

# FIG. 13

FIG. 14

FIG. 15

FIG. 16

FIG.17

FIG.18

FIG.19

FIG.201 FIG.202 FIG.203 FIG.21